**Europäisches Patentamt**

**European Patent Office**

**Office européen des brevets**

(11) Publication number: **0 137 937**

**B1**

## (12) EUROPEAN PATENT SPECIFICATION

(45) Date of publication of patent specification: **30.09.87**

(21) Application number: **84109201.8**

(22) Date of filing: **03.08.84**

(51) Int. Cl.⁴: **F 16 D 65/02**

(54) Disc brake.

(30) Priority: **03.10.83 US 538605**

(43) Date of publication of application:
**24.04.85 Bulletin 85/17**

(45) Publication of the grant of the patent:
**30.09.87 Bulletin 87/40**

(84) Designated Contracting States:
**DE FR GB IT**

(56) References cited:
**DE-A-2 850 439**
**US-A-3 494 448**
**US-A-4 111 285**
**US-A-4 220 224**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Ritsema, Irving Ray**
**24222 U.S. 20**
**South Bend Indiana 46628 (US)**

(74) Representative: **Brullé, Jean et al**
**Service Brevets Bendix 44, rue François 1er**
**F-75008 Paris (FR)**

EP 0 137 937 B1

## Description

This invention relates to a disc brake wherein a torque member movably carries a caliper which cooperates with a pair of friction elements to engage the latter with a rotor during braking.

Disc brakes are being used with heavy vehicles, such as trucks having gross vehicle weight of 10.886 kg (24,000 pounds). Because of the kinetic energy developed by a heavy vehicle, it is necessary to design a disc brake for such a vehicle with larger friction elements, a larger torque member and a larger caliper with more than one piston. Consequently, the disc brake assembly for a heavy vehicle is in itself heavier than normally used with passenger cars. The added weight for the truck disc brake causes the caliper to droop in a static mode as well as lift in a dynamic load. That is, an inner leg of the caliper receiving the pistons is heavier than an outer leg of the caliper, so that an inboard pin assembly supporting the caliper will be loaded radially inward. If the pin bends slightly about the torque member in response to the loading, the inner leg will droop or move radially inward and the outer leg will move radially outward. Also, during braking, the friction forces between the friction elements and the rotor will bias the caliper to lift radially outward away from the torque member. With the inner leg of the caliper engaging the pin assembly, the outer leg of the caliper will lift to a greater degree than the inner leg of the caliper.

The prior art is illustrated in United States Patent 3,494,448.

The present invention provides a solution to the static droop and the dynamic lift characteristics of the disc brake caliper. In particular, the present invention provides a disc brake comprising a torque member fixedly secured to a vehicle or the like adjacent a rotor to be braked, a caliper movably carried by the torque member and forming an inner leg on one side of the rotor, an outer leg on the other side of the rotor and a bridge extending axially between the inner and outer legs over an outer edge of the rotor, the caliper cooperating with a pair of friction elements to bias the latter into engagement with the rotor during braking, and a connecting member extending between the inner and outer legs to oppose deflection between the inner and outer legs, characterized in that said torque member includes a tie bar extending circumferentially over a portion of the outer edge of said rotor and contained axially between said pair of friction elements, said tie bar cooperating with said connecting member to define an interface therebetween opposing static droop and dynamic lift when the inner leg of said caliper tends to move radially inward and the outer leg of said caliper tends to move radially outward.

It is an advantage of the present invention that the connecting member opposes axial separation between the inner and outer legs of the caliper as well as limiting droop and lift for the caliper.

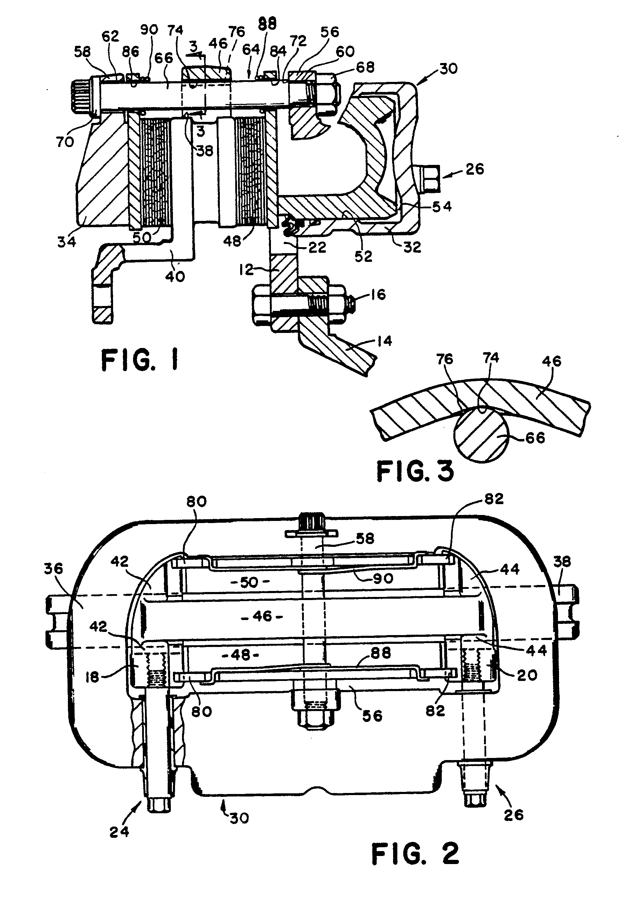

The accompanying drawings illustrate one embodiment of the invention. Figure 1 is a side offset cross-sectional view of a disc brake constructed in accordance with the present invention. Figure 2 is a top view of the disc brake shown in Figure 1. Figure 3 is a view taken along line 3—3 of Figure 1.

A disc brake 10 includes a torque member 12 secured to a vehicle flange 14 via suitable means such as bolts 16. The torque member 12 defines spaced arms 18 and 20 forming a recess 22. A pair of pin assemblies 24 and 26, see Figure 2, are fastened to the torque member to movably carry a caliper 30 with an inner leg 32 in the recess 22, an outer leg 34 facing the inner leg and a bridge 36 connecting the legs 32 and 34. The bridge 36 extends over an outer edge 38 of a rotor 40.

In Figure 2, the torque member arms 18 and 20 terminate in axially extending flanges 42 and 44, respectively, extending over the rotor edge 38. The flanges 42 and 44 are connected via a tie bar 46 to oppose movement or separation between the flanges 42 and 44. A pair of friction elements 48 and 50 are movably carried on the flanges 42 and 44 such that friction element 48 is disposed between rotor 40 and inner leg 32 and friction element 50 is disposed between rotor 40 and outer leg 34.

The caliper inner leg 32 is formed with a pair of bores, one of which is shown in Figure 1 at 52, for sealingly receiving a pair of pistons, one of which is shown in Figure 1 at 54. The pistons cooperate with the wall of the bores to form pressure chambers capable of receiving fluid-pressure during braking. The caliper inner leg 32 forms a radially extending rib 56 between the pair of pistons while the outer leg 34 also forms a radially extending rib 58. Both 56 and 58 ribs are provided with openings 60 and 62, respectively, for receiving a connecting member 64 comprising a bolt 66 and a nut 68. The opening 62 is larger than the opening 60 so that a large diameter portion of bolt 66 adjacent head 70 fits within opening 62 and a small diameter portion of bolt 66 adjacent nut 68 fits within opening 60. A shoulder 72 on the bolt between the large and small diameter portions abuts the rib 56 to limit the spacing between the ribs when the nut 68 is tightly secured to the bolt. The tie bar 46 is provided with a recess 74 defining an arcuate surface 76 substantially matching the outer surface of bolt 66. The bolt 66 extends into the recess 74 and is capable of slidably engaging the arcuate surface 76 as described more fully hereinafter.

Each friction element 48 and 50 is provided with transversely extending ears 80 and 82 slidably engaging the radial outer edge of the flanges 42 and 44, respectively. The friction elements also abut the inner edge of the respective flanges to transmit braking torque to the torque member 12. The bolt 66 extends through openings 84 and 86 on friction elements 48 and 50, respectively, to retain the friction elements in position between the torque member flanges 42 and 44. A pair of springs 88 and 90 coil around the bolt 66 and engage the friction elements 48 and 50, respectively, to oppose rattling between the friction elements, the bolt and the flanges.

Viewing Figure 1, the caliper 30 receives fluid pressure during braking to move to the right while the piston 54 moves to the left. The friction elements engage the rotor 40 to retard rotation of the latter. The inner leg 30 of the caliper includes more mass than the outer leg because the inner leg is provided with the extended bores for receiving the pistons. Consequently, the inner leg transmits a verticle static force to the pin assemblies 24 and 26. With the pin assemblies secured at one end to the torque member 12, the verticle static force biases the pin assemblies to bend radially inward slightly about the torque member 12 to lift the outer leg 34 and droop the inner leg 34. When the outer leg is lifted, the bolt 66 is also moved outward to fully engage the tie bar 46 which opposes further lifting of the outer leg. As the friction elements are worn, the caliper moves further to the right, so that the pin assemblies will be further stressed via the static force biasing the pin assemblies to bend about the torque member.

In addition to the static forces, the friction elements engage the rotating rotor during braking. Frictional forces are transmitted from the rotor to the friction elements, which, in turn, abut one of the torque member arms to transmit the frictional forces thereto. With the rotor rotating about its axis and the trailing edge of each friction element abutting the torque member, the friction elements are biased outwardly at their leading edge. This outward bias is transmitted to the caliper via the engagement between the friction elements and the inner and outer caliper legs. In addition, the caliper inner and outer legs are loaded in opposite directions tending to lift caliper radially outwardly.

## Claims

1. A disc brake comprising a torque member (12) fixedly secured to a vehicle adjacent a rotor (40) to be braked, a caliper (30) movably carried by the torque member (12) and forming an inner leg (32) on one side of the rotor (40), an outer leg (34) on the other side of the rotor (40) and a bridge (36) extending axially between the inner and outer legs over an outer edge of the rotor, the caliper cooperating with a pair of friction elements (48, 50) to bias the latter into engagement with the rotor (40) during braking, and a connecting member (64) extending between the inner and outer legs to oppose deflection between the inner and outer legs, characterized in that said torque member (12) includes a tie bar (46) extending circumferentially over a portion of the outer edge (38) of said rotor (40) and contained axially between said pair of friction elements (48, 50), said tie bar (46) cooperating with said connecting member (64) to define an interface (76) therebetween opposing static droop and dynamic lift when the inner leg (32) of said caliper (30) tends to move radially inward and the outer leg (34) of said caliper (30) tends to move radially outward, respectively.

2. The disc brake of claim 1 in which said interface (76) is formed by a sliding engagement between said connecting member (64) and said tie bar (46).

3. The disc brake of claim 1 in which said tie bar (46) defines a radial spacing with the portion of the outer edge (38) of said rotor (40) and said connecting member (64) extends through said radial spacing.

4. The disc brake of claim 1 in which said tie bar is provided with an arcuate recess (74) forming a surface extending axially and facing radially inward, said connecting member (64) extending into said recess (74) to slidably engage said surface.

## Patentansprüche

1. Scheibenbremse mit einem Bremsträger (12), der an einem Fahrzeug angrenzend an einer abzubremsenden Bremsscheibe (40) befestigt ist, einem Bremssattel (30), der von dem Bremsträger (12) beweglich getragen wird und einen inneren Schenkel (32) auf einer Seite der Bremsscheibe (40), einen äußeren Schenkel (34) auf der anderen Seite der Bremsscheibe (40) und eine Brücke (36) bildet, welche sich axial zwischen dem inneren und äußeren Schenkel über einen Außenrand der Bremsscheibe erstreckt, wobei der Bremssattel mit zwei Reibgliedern (48, 50) zusammenwirkt, um die letzteren beim Bremsen in Anlage mit der Bremsscheibe (40) zu drücken, und einem Verbindungsteil (64), das sich zwischen dem inneren und äußeren Schenkel erstreckt, um einer Verformung zwischen dem inneren und äußeren Schenkel entgegenzuwirken, dadurch gekennzeichnet, daß der Bremsträger (12) eine Zugstange (46) aufweist, die sich in Umfangsrichtung über einen Teile des Außenrandes (38) der Bremsscheibe (40) erstreckt und axial zwischen den beiden Reibgliedern (48, 50) mit dem Verbindungsteil (64) zusammenwirkt, um dazwischen eine Zwischenfläche (76) zu bilden, die einem statischen Absenken und dynamischen Anheben entgegenwirkt, wenn sich der innere Schenkel (32) des Bremssattels (30) radial nach innen bzw. der äußere Schenkel (34) des Bremssattels (30) radial nach außen bewegen möchte.

2. Scheibenbremse nach Anspruch 1, bei der die Zwischenfläche (76) durch Gleitberührung zwischen dem Verbindungsteil (64) und der Zugstange (46) gebildet ist.

3. Scheibenbremse nach Anspruch 1, bei der die Zugstange (46) einen radialen Zwischenraum mit dem Teil des Außenrandes (38) des Rotors (40) bildet und das Verbindungsteil (64) sich durch diesen radialen Zwischenraum erstreckt.

4. Scheibenbremse nach Anspruch 1, bei der die Zugstange mit einer gekrümmten Ausnehmung (74) versehen ist, die eine axial verlaufende und radial nach innen gerichtete Fläche bildet, wobei das Verbindungsteil (64) in die Ausnehmung (74) ragt, um an dieser Fläche gleitend anzuliegen.

## Revendications

1. Frein à disque comprenant un organe de torsion (12) monté fixement sur un véhicule au voisinage d'un rotor (40) à freiner, un étrier (30) mobile porté par l'organe de torsion (12) et comportant un bras intérieur (32) d'un côté du rotor (40), un bras extérieur (34) de l'autre côté du rotor (40) et un pont (36) s'étendant axialement entre les bras intérieur et extérieur par dessus un bord extérieur du rotor, l'étrier coopérant avec une paire de garnitures de friction (48, 50) pour pousser ces dernières en contact avec le rotor (40) pendant le freinage, et un élément de liaison (64) s'étendant entre les bras intérieur et extérieur pour s'opposer à toute déflexion entre les bras intérieur et extérieur, caractérisé en ce que ledit organe de torsion (12) comprend un tirant de raccordement (46) s'étendant circonférentielle-ment sur une partie du bord extérieur (38) dudit rotor (40) et logé axialement entre ladite paire de garnitures de friction (48, 50), ledit tirant de raccordement (46) coopérant avec ledit élément de liaison (64) pour délimiter entre eux un interface (76) s'opposant au relâchement statique et au soulèvement dynamique lorsque le bras intérieur (32) dudit étrier (30) tend à se déplace radialement vers l'intérieur et que le bras extérieur (34) dudit étrier (30) tend à se déplacer radialement vers l'extérieur, respectivement.

2. Frein à disque suivant la revendication 1, dans lequel ledit interface (76) est formé par un contact glissant entre ledit élément de liaison (64) et ledit tirant de raccordement (46).

3. Frein à disque suivant la revendication 1, dans lequel ledit tirant de raccordement (46) définit un espacement radial avec la portion du bord extérieur (38) dudit rotor (40) et où ledit élément de liaison (64) s'étend à travers ledit espacement radial.

4. Frein à disque suivant la revendication 1, dans lequel ledit tirant de raccordement est pourvu d'un évidement incurvé (74) formant une surface qui s'étend axialement et qui est orientée radialement vers l'intérieur, ledit élément de liaison (64) s'étendant dans ledit évidement (74) de façon à glisser sur ladite surface.

FIG. 1

FIG. 3

FIG. 2

1